# FASCICULE DE BREVET EUROPEEN

(11) **EP 0 930 790 B1**
(45) Date de publication et mention de la délivrance du brevet: **15.03.2006**
(21) Numéro de dépôt: 98402376.2
(22) Date de dépôt: 28.09.1998
(51) Int. Cl.: H04Q 3/00

(54) **Passerelle intelligente entre un point de contrôle de service et un réseau de signalisation**
Intelligente Schnittstelle zwischen einem Dienststeuerpunkt und einem Signalisierungsnetz
Intelligent gateway between a service control point and a signalling network

(30) Priorité: 15.01.1998 FR 9800348
(43) Date de publication de la demande: 21.07.1999
(73) Titulaire: ALCATEL, 75008 Paris (FR)
(72) Inventeur: Couturier, Alban, 75013 Paris (FR); Anquetil, Laurent-Philippe, 75017 Paris (FR)
(74) Mandataire: Lamoureux, Bernard

(56) Documents cités:
- EP-A- 0 710 042
- KWANG-JAE JEONG ET AL: "EFFECTIVE OVERLOAD PREVENTION AND CONTROL FOR TRAFFIC MANAGEMENT IN INTELLIGENT NETWORK" PROCEEDINGS OF THE 4TH INTERNATIONAL CONFERENCE ON INTELLIGENCE IN NETWORKS - ICIN 96, 25 - 28 novembre 1996, pages 229-234, XP002067129 BORDEAUX (FR)
- M. SEVCIK ET AL: "CUSTOMERS IN DRIVER'S SEAT: PRIVATE INTELLIGENT NETWORK CONTROL POINT" PROCEEDINGS OF THE INTERNATIONAL SWITCHING SYMPOSIUM, ISS ' 95, PAPER P.Y6, vol. 2, 23 - 28 avril 1995, pages 41-44, XP000495622 BERLIN (DE)
- BUDIHARDJO P S ET AL: "ACHIEVING SS7 NETWORK EFFICIENCY THROUGH NODE INTEGRATION" IEEE/IECE GLOBAL TELECOMMUNICATIONS CONFERENCE, TOKYO, NOV. 15 - 18, 1987, vol. 3, 15 - 18 novembre 1987, pages 1570-1577, XP002026014 Tokyo (JP)
- C. BUCKLES: "Very high capacity signaling transfer point for intelligent network services" IEEE INTERNATIONAL CONFERENCE ON COMMUNICATIONS - PAPER 40.2, vol. 3, 12 - 15 juin 1988, pages 1-4, XP000012083 PHILADELPHIA (US)
- "TRANSPARENT MESSAGE ROUTING BETWEEN AN SS#7 NETWORK AND X.25 NETWORK" IBM TECHNICAL DISCLOSURE BULLETIN, vol. 35, no. 3, 1 août 1992, pages 434-436, XP000326333
- ZAHARYCHUK J ET AL: "GATEWAY SIGNAL TRANSFER POINTS: DESIGN, SERVICES AND BENEFITS" IEEE INTERNATIONAL CONFERENCE ON COMMUNICATIONS, PAPER 223.2, vol. 1, 15 - 19 avril 1990, pages 233-240, XP000147408 ATLANTA (US)

## Description

La présente invention est relative à une passerelle connectée à deux réseaux de données, permettant d'effectuer une traduction de façon intelligente entre deux protocoles de communication, l'un des deux réseaux de données, au moins, comportant des applications logicielles.

L'invention s'applique particulièrement à la traduction entre des messages issus d'un réseau de signalisation et des messages d'un environnement distribué orienté objets, conformément par exemple aux spécifications TINA (*Telecommunication Intelligent Network Architecture*). Un tel système est par exemple décrit dans le document XP- 002 067 129.

Habituellement, les passerelles effectuent la traduction des messages entrants, directement, en messages sortants, c'est-à-dire que les passerelles n'effectuent aucune interprétation des messages.

En général, ce type de passerelle génère au moins autant de messages sortants que de messages entrants. Dans la mesure où les applications logicielles sont distribuées sur un réseau, cette verbosité entraîne un encombrement de ce réseau, et une diminution globale des performances du système.

La but de la présente invention est de proposer une passerelle permettant de diminuer le nombre de messages sortants. Cette diminution est effectuée en déléguant une partie du traitement effectué par les applications, directement au niveau de la passerelle.

L'objet de l'invention est une passerelle entre un premier réseau de données et un second réseau de données, permettant la traduction de messages conformes à un premier protocole propre audit premier réseau de données, vers des messages conformes à un second protocole propre audit second réseau de données, ledit second réseau de données comportant des applications logicielles.

Ladite passerelle est caractérisée :
- en ce qu'elle comporte un élément logiciel d'enregistrement,
- en ce que les messages qui proviennent ou qui sont destinés à une application logicielle particulière parmi lesdites applications logicielles, sont traités par un élément logiciel représentant, contenu dans ladite passerelle,
- et en ce que chaque nouvelle application logicielle rendue disponible sur ledit second réseau de données provoque la détermination dudit élément logiciel représentant, auprès dudit élément logiciel d'enregistrement.

Selon une première mise en oeuvre de l'invention, le code des éléments logiciels représentants est transmis à la passerelle.

Il peut s'agir de code objet qui peut être directement exécuté par la passerelle.

Il peut aussi s'agir de code source (par exemple, du code en langage Java), qui peut être interprété par la passerelle, qui comporte l'interpréteur adéquat (par exemple, une machine virtuelle Java).

Selon une seconde mise en oeuvre, la passerelle dispose d'un ensemble d'éléments logiciels représentants. Chaque nouvelle application rendue disponible choisit alors un élément logiciel représentant parmi cet ensemble.

L'émission du code ou le choix de l'élément logiciel représentant peut être pris en charge par l'application logicielle elle-même ou bien par un administrateur.

La création de l'élément logiciel représentant peut être effectuée à chaque fois que nécessaire, c'est-à-dire à chaque fois qu'une traduction est demandée.

Une autre mise en oeuvre consiste à effectuer la création de l'élément logiciel représentant lors de l'enregistrement de l'application logicielle auprès de la passerelle (via le moyen d'enregistrement). Cette mise en oeuvre a comme avantage de minimiser le nombre de créations (et de suppressions) d'éléments logiciels, ces créations étant assez coûteuses pour un système informatique.

D'autres avantages et caractéristiques de l'invention apparaîtront de façon plus claire dans la description de l'application de l'invention aux réseaux intelligents, qui va suivre en référence aux figures annexées.

La figure 1 illustre schématiquement, l'architecture générale d'un réseau de télécommunication.

La figure 2 illustre la passerelle selon l'invention, dans le cadre d'une application aux réseaux intelligents.

La figure 3 représente un dialogue entre un demandeur de service et un SCP, avec une passerelle selon l'état de la technique.

La figure 4 représente le même dialogue avec une passerelle conforme à l'invention.

Un réseau intelligent peut être défini comme étant un réseau de télécommunication indépendant des services. Autrement dit, les services proposés par le système ne sont plus implantés sur les éléments du réseau de transport (commutateurs...), comme cela était le cas sur les réseaux classiques, mais sur des systèmes informatiques connectés à celui-ci. Cette indépendance des services vis-à-vis du réseau de transport permet une plus grande souplesse dans la gestion du système ainsi formé.

Plus précisément, dans un réseau intelligent, les services sont gérés par des systèmes informatiques couplés à des bases de données. Cet ensemble est appelé point de contrôle de service, ou SCP pour *Service Control Point.* Le système informatique qui gère un SCP particulier peut être un ordinateur unique, ou bien, un réseau d'ordinateurs.

Dans la terminologie propre aux réseaux intelligents, les commutateurs du réseau de télécommunication, sont appelés SSP, pour *Service Switching Point,* en anglais.

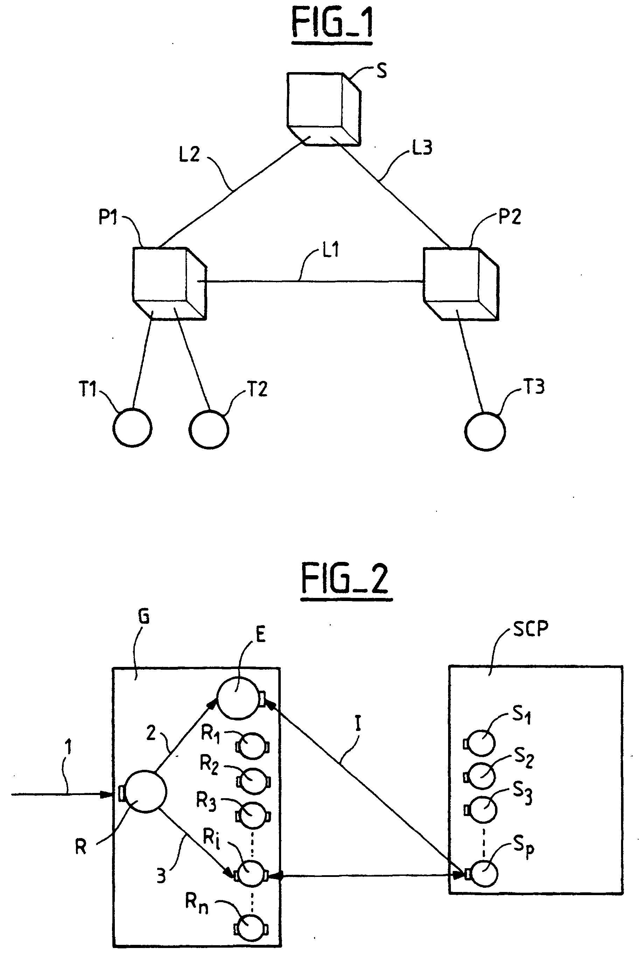

La figure 1, jointe, illustre un exemple d'architecture de réseau intelligent. Les références P1 et P2 représentent deux SSP, auxquels sont connectés les terminaux T1, T2 et T3. Ces terminaux représentent les abonnées du réseau de télécommunication. C'est sur le lien L1 que transitent les données propres à la communication (voix, fax, etc.).

Les éléments L1, T1, T2, T3, P1 et P2 représentent le réseau de transport.

Les SCP et les SSP sont reliés ensemble par un réseau appelé réseau de signalisation, qui est distinct du réseau de télécommunication proprement dit.

Ainsi, dans l'exemple illustré par la figure 1, les SSP P1 et P2 sont reliés à un SCP S, par les liens L2 et L3. Ces deux liens, ainsi que les SCP, forment le réseau de signalisation.

L'interface entre le réseau de signalisation et le réseau de télécommunication proprement dit est uniquement composée des SSP.

Un ensemble classique de protocoles pour réseau de signalisation est le système de signalisation numéro 7 (ou SS7 pour *Signalling System number 7*), qui est défini par les recommandations de l'ITU-T (*International Telecommunication Union - Telecommunication Standardization Sector*), dans la série Q.700 à Q783 et les documents « SS7 ITU-T standards 1988, Blue Book » ainsi que « SS7 ITU-T standards 1992, White Book ».

SS7 est une pile de protocoles allant du plus bas niveau, aux niveaux les plus élevés, c'est-à-dire qui correspondent à la couche 7 du standard OSI (*Open System Interconnection*) de l'ISO (*International Standards Organisation*).

Par ailleurs, le consortium TINA (*Telecommunication Intelligent Network Architecture*) a proposé une architecture plus précise pour les applications logicielles fournissant des services dans le cadre de réseaux intelligents.

Dans la suite, les termes « application logicielle » et « service » seront utilisés de façon interchangeable.

Les services, qui sont localisés sur les SCP, doivent être développés sur un environnement de traitement distribué, ou DPE (pour *Distributed Processing Environment*). Typiquement, le DPE utilisé est l'architecture CORBA (*Common Object Request Broker Architecture*), proposée par l'OMG (*Open Management Group*). CORBA permet la communication entre différents programmes indépendamment des architectures informatiques sous-jacentes et des langages de programmation utilisés.

Par conséquent, on comprend que le SCP reçoit de la part du SSP des messages qui sont conformes aux standards SS7, tandis que le service nécessite des messages conformes aux spécifications du DPE, plus particulièrement aux spécifications CORBA.

Plus précisément, les messages reçus par le SCP peuvent être conformes au protocole INAP (pour *Intelligent Network Application Protocol*, en anglais), qui est au-dessus de la couche TCAP dans la pile de protocole SS7. Le protocole INAP est défini par la série de recommandations Q.12xx de l'ITU-T.

Les passerelles actuellement disponibles dans l'état de la technique effectuent des traductions simples, c'est-à-dire que chaque message INAP est directement traduit en un ou plusieurs messages CORBA, et réciproquement, sans aucune interprétation de la part de la passerelle.

Dans la mesure où le SCP peut être mis en oeuvre sur un environnement distribué, il peut en résulter un grand nombre de messages CORBA transitant dans les deux sens, entre le SCP et la passerelle.

Or, il s'avère qu'une traduction intelligente peut permettre l'économie d'un grand nombre de ces messages. Il en résulte une économie de la bande passante du réseau sur lequel est mis en oeuvre le SCP, et, conséquemment, de meilleures performances.

Sur la figure 2, la référence G représente la passerelle selon l'invention. Elle comporte un élément logiciel R permettant le réception des messages au protocole INAP. Cet élément logiciel peut comporter un système de files d'attente permettant de gérer dynamiquement et de façon asynchrone les arrivées de messages.

La passerelle comporte aussi un élément logiciel E permettant d'une part l'enregistrement de nouveaux services sur le SCP, et d'autre part, le routage correct des messages INAP arrivant sur l'élément logiciel R.

La passerelle comporte aussi des éléments logiciels R₁ à Rₙ, que l'on va appeler représentants par la suite, dont le but est d'effectuer une traduction intelligente des messages INAP vers des messages CORBA, et réciproquement.

Selon l'invention, une partie du traitement effectué par le service est délocalisée sur la passerelle G, au niveau des représentants R₁ à Rₙ.

Il s'agit typiquement de traitements simples, comme par exemple l'authentification du demandeur de service.

Selon l'état de la technique, une telle authentification nécessite classiquement un dialogue entre le SCP et le demandeur de service, chaque message de ce dialogue devant être traduit d'un protocole vers un autre.

Selon l'invention, ce dialogue, peut être pris en charge par le représentant du service. On fait ainsi l'économie des nombreuses traductions qui étaient nécessaires avec une passerelle selon l'état de la technique.

Puisque fortement dépendant du service, il existe plusieurs façon d'effectuer des traductions intelligentes. Aussi, plusieurs représentants peuvent être rendus disponibles, chaque service présent sur le SCP pouvant choisir le représentant qui lui convient.

Le SCP comporte, quant à lui, un ou plusieurs services référencés S₁ à Sₚ sur la figure 2.

Lorsqu'un nouveau service Sₚ est créé, il émet à l'adresse de l'élément logiciel E, un message I d'enregistrement ou d'initialisation, qui permet d'indiquer le représentant que le service utilisera par la suite (Rᵢ sur l'exemple de la figure).

Selon une première mise en oeuvre, ce représentant Rᵢ est présent d'origine sur la passerelle. Cela recouvre la possibilité que le représentant puisse être créé dynamiquement à la demande du service Sᵢ, les données nécessaires à sa création dynamique étant de toute façon présente sur la passerelle.

Cette mise en oeuvre représente le cas où la passerelle est livrée avec un ensemble de représentants prédéterminés.

Dans la mesure où, quelque soit le nombre, l'ensemble des représentants ne pourra jamais couvrir l'ensemble des possibilités qui peuvent s'avérer nécessaires, il est judicieux de proposer au sein de cet ensemble, un sous-ensemble de représentants non intelligents, c'est-à-dire effectuant une traduction conforme à l'état de la technique. Ces représentants traduisent donc un message INAP en un message CORBA et réciproquement. -

Ces représentants peuvent ainsi être choisis, à défaut, lorsqu'aucun autre représentant ne convient.

Une seconde mise en oeuvre consiste à transmettre, par exemple lors de l'enregistrement, dynamiquement depuis le nouveau service créé Sₚ vers la passerelle G, les données nécessaires à la création du représentant correspondant Rᵢ. Il peut s'agir, par exemple, de code objet migrant, tel du code Java.

Cette mise en oeuvre nécessite que le développeur d'un nouveau service pour le réseau intelligent développe aussi le représentant adéquat.

Après l'étape consistant pour le nouveau service Sₚ à s'enregistrer auprès de l'élément logiciel E, chaque nouveau message INAP (1) lui étant destiné, sera réceptionné par l'élément logiciel R puis transmis (2) vers l'élément logiciel E chargé de l'enregistrement. Celui vérifie s'il existe un service correspondant à ce message, qui s'est précédemment enregistré auprès de lui. Comme tel est le cas, le message est transmis auprès du représentant adéquat Rᵢ qui est à même d'effectuer correctement le traitement du message.

La mise en oeuvre exacte du procédé d'enregistrement ne sera pas plus décrite car étant à la porté de l'homme du métier. Par exemple, la passerelle G peut comporter une table de correspondance permettant de mettre en relation des identificateurs des services présents sur le SCP, avec les représentants correspondants.

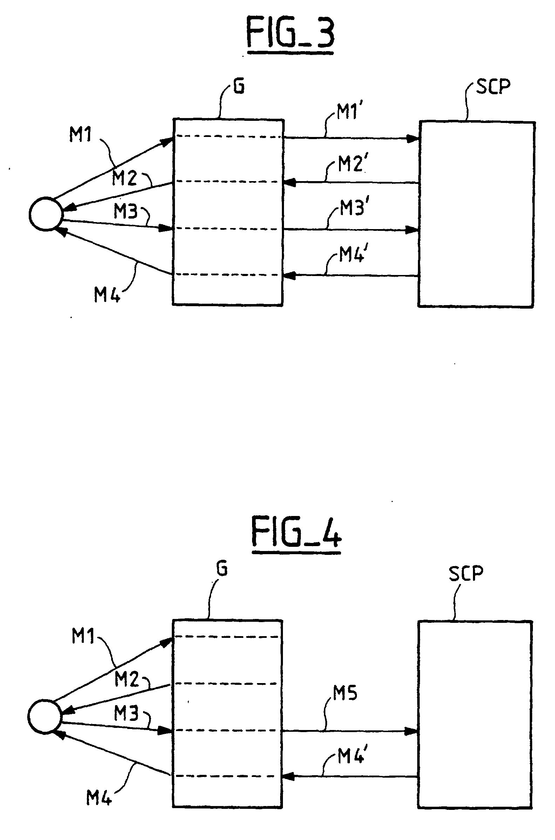

Les figures 3 et 4 illustrent un exemple de début de conversation entre un demandeur de service (D) et un point de contrôle d'accès (SCP). Ce début de conversation représente l'authentification du demandeur de service auprès du SCP. La figure 3 illustre le déroulement du mécanisme avec une passerelle selon l'état de la technique, tandis que la figure 4 illustre le même mécanisme avec une passerelle conforme à la présente invention.

Sur la figure 3, la référence 1 représente la demande d'accès au service émanant du demandeur D. Cette demande arrive sur la passerelle G et est traduite puis transmise (message référencé M1') à destination du SCP.

Le SCP répond (message M2') par une demande d'identification. La demande est traduite par la passerelle G puis transmise (M2) au demandeur.

Le demandeur envoie alors son identification (M3), qui est elle aussi traduite par la passerelle G et envoyé (M3') au SCP.

Finalement, le SCP envoie un message signifiant l'accord sur l'accès au service (M4'), qui est traduit et envoyé (M4) au demandeur.

Sur la figure 4, le demandeur envoie une demande d'accès au service (M1). Cette demande est traitée par la passerelle G (ou plus précisément, par l'élément logiciel représentant du service concerné), qui envoie au demandeur une demande d'identification (M2).

Le demandeur envoie alors son identification (M3), ce qui provoque la transmission à destination du SCP d'un message M5 contenant la demande d'accès au service avec l'identification du demandeur.

Comme précédemment, le SCP renvoie un message M4' d'accord d'accès au service qui est traduit par la passerelle en un message M4 qui est envoyé au demandeur.

En comparant le dialogue avec une passerelle selon l'état de la technique et le dialogue avec une passerelle conforme à la présente invention, on remarque que le nombre de communications entre la passerelle et le SCP a été divisé par deux.

Cette mise en oeuvre pour la traduction de messages INAP en messages CORBA peut être transposé directement à d'autres couples de protocoles.

Ainsi, le premier protocole peut être conforme à la recommandation X.88x de l'ITU-T, correspondant à la norme ISO 13712-1 et intitulée ROS pour *Remote Operation Service.*

Ce premier protocole peut aussi être conforme aux protocoles MAP (*Mobile Application Protocol*) ou TCAP (*Transaction Capabilities Application Part*)*,* respectivement définis par les recommandations ITU-T des séries Q.7xx et X.77x.

De la même façon, le second protocole peut être conforme à une autre architecture distribuée, orientée objets ou pas.

## Revendications

1. Passerelle entre un premier réseau de données et un second réseau de données, permettant la traduction de messages conformes à un premier protocole propre audit premier réseau de données, vers des messages conformes à un second protocole propre audit second réseau de données, ledit second réseau de données comportant des applications logicielles, et ladite passerelle étant **caractérisée en ce qu'**elle comporte un élément logiciel d'enregistrement,
**en ce que** les messages qui proviennent ou qui sont destinés à une application logicielle particulière parmi lesdites applications logicielles, sont traités par un élément logiciel représentant, contenu dans ladite passerelle,
et **en ce que** chaque nouvelle application logicielle rendue disponible sur ledit second réseau de données provoque la détermination dudit élément logiciel représentant, auprès dudit élément logiciel d'enregistrement.

2. Passerelle selon la revendication précédente, **caractérisée en ce que** ladite détermination consiste à envoyer le code dudit élément logiciel représentant.

3. Passerelle selon la revendication 1, **caractérisée en ce que** ladite détermination consiste à choisir ledit élément logiciel représentant, parmi un ensemble d'éléments logiciels représentants présents sur ladite passerelle, et éventuellement à transmettre audit élément logiciel représentant, un ensemble de paramètres.

4. Passerelle selon l'une des revendications 1 à 3, **caractérisée en ce que** ladite détermination est effectuée par ladite nouvelle application logicielle.

5. Passerelle selon l'une des revendications 1 à 3; **caractérisée en ce que** ladite détermination est effectuée par un moyen d'administration.

6. Passerelle selon l'une des revendications précédentes, **caractérisée en ce que** ladite détermination provoque la création dudit élément logiciel représentant.

7. Passerelle selon l'une des revendications précédentes, **caractérisée en ce que** ledit premier réseau de données est un réseau de signalisation de type SS7.

8. Passerelle selon l'une quelconque des revendications 1 à 6, **caractérisée en ce que** ledit premier protocole est de type ROS.

9. Passerelle selon la revendication 7, **caractérisée en ce que** ledit premier protocole est de type TCAP.

10. Passerelle selon les revendications 7 ou 9, **caractérisée en ce que** ledit premier protocole est de type INAP ou MAP.

11. Passerelle selon l'une quelconque des revendications précédentes, **caractérisée en ce que** ledit second protocole est un protocole de communication entre objets distribués.

12. Passerelle selon la revendication précédente, **caractérisée en ce que** ledit protocole est conforme aux spécifications CORBA.

## Claims

1. Gateway between a first data network and a second data network for translating messages conforming to a first protocol specific to said first data network into messages conforming to a second protocol specific to said second data network, said second data network including software applications and said gateway being **characterised in that** it includes a storage software element,
**in that** messages received from or sent to a particular one of said software applications are processed by a proxy software element contained in said gateway,
and **in that** each new software application made available on said second data network causes the determination of said proxy software element at said storage software element.

2. Gateway according to the preceding claim, **characterised in that** said determination consists in sending the code of said proxy software element.

3. Gateway according to Claim 1, **characterised in that** said determination consists in selecting said proxy software element from a set of proxy software elements present at said gateway and where applicable sending a set of parameters to said proxy software element.

4. Gateway according to any one of Claims 1 to 3, **characterised in that** said determination is effected by said new software application.

5. Gateway according to any one of Claims 1 to 3, **characterised in that** said determinationis effected by administration means.

6. Gateway according to any one of the preceding claims, **characterised in that** said determination causes the creation of said proxy software element.

7. Gateway according to any one of the preceding claims, **characterised in that** said first data network is an SS7 signalling network.

8. Gateway according to any one of Claims 1 to 6, **characterised in that** said first protocol is of the ROS type.

9. Gateway according to Claim 7, **characterised in that** said first protocol is of the TCAP type.

10. Gateway according to Claim 7 or 9, **characterised in that** said first protocol is of the INAP or MAP type.

11. Gateway according to any one of the preceding claims, **characterised in that** said second protocol is a protocol for communication between distributed objects.

12. Gateway according to the preceding claim, **characterised in that** said protocol conforms to the CORBA specifications.

## Patentansprüche

1. Schnittstelle zwischen einem ersten Datennetz und einem zweiten Datennetz, welche die Übersetzung von Meldungen gemäß einem ersten diesem ersten Datennetz eigenen Protokoll in Meldungen gemäß einem zweiten diesem zweiten Datennetz eigenen Protokoll ermöglicht, wobei dieses zweite Datennetz Softwareanwendungen beinhaitet und diese Schnittstelle **dadurch gekennzeichnet ist, dass** sie ein Speicherungs-Software-Element enthält,
**dadurch gekennzeichnet, dass** die Meldungen, die von ether besonderen Softwareanwendung von diesen Softwareanwendungen kommen oder für diese bestimmt sind, durch ein Repräsentanten-Softwareelement bearbeitet werden, das in dieser Schnittstelle enthalten ist,
und **dadurch gekennzeichnet, dass** jede an diesem zweiten Datennetz verfügbar gemachte neue Softwareanwendung die Bestimmung dieses Repräsentanten-Softwareelements bei diesem Speicherungs-Software-Element bewirkt.

2. Schnittstelle gemäß vorstehendem Anspruch, **dadurch gekennzeichnet, dass** diese Bestimmung darin besteht, den Code dieses Repräsentanten-Softwareelements zu senden.

3. Schnittstelle gemäß Anspruch 1, **dadurch gekennzeichnet, dass** diese Bestimmung darin besteht, aus einem Komplex von an dieser Schnittstelle vorhandenen Repräsentanten-Softwareelementen dieses Repräsentanten-Softwareelement auszuwählen und eventuell an dieses Repräsentanten-Softwareelement einen Satz Parameter zu übermitteln.

4. Schnittstelle gemäß einem der Ansprüche 1 bis 3, **dadurch gekennzeichnet, dass** diese Bestimmung durch die bezeichnete neue Softwareanwendung erfolgt.

5. Schnittstelle gemäß einem der Ansprüche 1 bis 3, **dadurch gekennzeichnet, dass** diese Bestimmung durch ein Administrationsmittel erfolgt.

6. Schnittstelle gemäß einem der vorstehenden Ansprüche, **dadurch gekennzeichnet, dass** diese Bestimmung die Erstellung des bezeichneten Repräsentanten-Softwareelements bewirkt.

7. Schnittstelle gemäß einem der vorstehenden Ansprüche, **dadurch gekennzeichnet, dass** dieses erste Datennetz ein Signalisierungsnetz vom Typ SS7 ist.

8. Schnittstelle gemäß einem der Ansprüche 1 bis 6, **dadurch gekennzeichnet, dass** dieses erste Protokoll vom Typ ROS ist.

9. Schnittstelle gemäß Anspruch 7, **dadurch gekennzeichnet, dass** dieses erste Protokoll vom Typ TCAP ist.

10. Schnittstelle gemäß Anspruch 7 oder 9, **dadurch gekennzeichnet, dass** dieses erste Protokoll vom Typ INAP oder MAP ist.

11. Schnittstelle gemäß einem der vorstehenden Ansprüche, **dadurch gekennzeichnet, dass** dieses zweite Protokoll ein Kommunikationsprotokoll zwischen verteilten Objekten ist.

12. Schnittstelle gemäß dem vorstehenden Anspruch, **dadurch gekennzeichnet, dass** dieses Protokoll den CORBA-Spezifikationen entspricht.
